(19) Europäisches Patentamt
European Patent Office
Office européen des brevets

(11) Veröffentlichungsnummer : **0 302 342 B1**

(12) # EUROPÄISCHE PATENTSCHRIFT

(45) Veröffentlichungstag der Patentschrift :
**21.08.91 Patentblatt 91/34**

(51) Int. Cl.$^5$ : **C09C 1/24, G11B 5/706**

(21) Anmeldenummer : **88111938.2**

(22) Anmeldetag : **25.07.88**

(54) **Thermostabile Eisenoxidpigmente, Verfahren zu ihrer Herstellung sowie deren Verwendung.**

(30) Priorität : **06.08.87 DE 3726048**

(43) Veröffentlichungstag der Anmeldung :
**08.02.89 Patentblatt 89/06**

(45) Bekanntmachung des Hinweises auf die Patenterteilung :
**21.08.91 Patentblatt 91/34**

(84) Benannte Vertragsstaaten :
**DE FR GB IT NL**

(56) Entgegenhaltungen :
**FR-A- 2 281 410**

(73) Patentinhaber : **BAYER AG**
**W-5090 Leverkusen 1 Bayerwerk (DE)**

(72) Erfinder : **Jonas, Friedrich, Dr.**
**Krugenofen 15**
**W-5100 Aachen (DE)**
Erfinder : **Schick, Peter Reinhard, Dr.**
**Buschstrasse 171**
**W-4150 Krefeld 1 (DE)**
Erfinder : **Wiese, Jürgen, Dr.**
**Dörperhofstrasse 39**
**W-4150 Krefeld 1 (DE)**

EP 0 302 342 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die vorliegende Erfindung betrifft Eisenoxidpigmente mit einem Eisen-(II)-Gehalt von mindestens 5 Gew.-% mit einer Beschichtung zur Erhöhung der Thermostabilität, Verfahren zur Herstellung dieser Pigmente sowie deren Verwendung.

Eisenoxidpigmente, welche Eisen in der Oxidationsstufe + 2 enthalten, stellen im Vergleich zum Eisen-(III)-oxid $Fe_2O_3$ thermodynamisch instabile Phasen dar. Sie können in Gegenwart von Luft bzw. Sauerstoff partiell oder vollständig oxidiert werden, z.B.

$$2\ Fe_3O_4 + 1/2\ O_2 \rightarrow 3\ Fe_2O_3$$

Solche Reaktionen sind beispielsweise bei Eisenoxidschwarz-Pigmenten bekannt, die in ihrer Zusammensetzung und in ihrer Struktur dem Magnetit entsprechen. Das Pigment büßt durch die Oxidation seine wichtigste Eigenschaft, nämlich die Farbe, ein und wird somit unbrauchbar. Die Oxidationsneigung nimmt verständlicherweise in dem Maße zu wie die Feinteiligkeit und somit die spezifische Oberfläche der Pigmente.

Das gleiche gilt auch für Mischungen von Eisenoxidschwarz mit anderen Eisenoxid-Farbpigmenten — Eisenoxidrot bzw. Eisenoxidgelb — wie sie für braune Farbtöne hergestellt werden.

Ist es bei den Farbpigmenten der Verlust der coloristischen Eigenschaften, der sie unbrauchbar macht, so ist es bei den Eisen-(II)-haltigen Magnetpigmenten der Verlust der magnetischen Eigenschaften, der gleichfalls durch die Oxidation hervorgerufen wird. Gefährdet sind vor allem feinteilige Magnetitpigmente sowie Mischphasen zwischen Magnetit ($Fe_3O_4$) und Maghämit ($\gamma$-$Fe_2O_3$) mit hohem Eisen-(II)-Gehalt. Oxidationsempfindlich sind aber auch Mischphasen von Magnetit mit Maghämit und/oder Ferriten wie z.B. Cobaltferrit und solche Magnetpigmente, die aus einem Kern aus $Fe_3O_4$ oder einem Eisenoxid mit einem Oxidationszustand zwischen $Fe_3O_4$ und $\gamma$-$Fe_2O_3$ und einer diesen Kern umgebenden Hülle aus magnetischen Metalloxiden — insbesondere des Eisens und des Cobalts — zusammengesetzt sind. In der Fachliteratur findet man neben der Bezeichnung "Mischphase" auch den Ausdruck "Bertholloide" für die hier beschriebenen Zusammensetzungen.

Man hat bereits versucht, die Oxidationsempfindlichkeit feinteiliger ferrimagnetischer Magnetitpigmente durch Behandlung mit heterocyclischen organischen Verbindungen zu vermindern (DE-A 2744598).

In der DE-A 3211327 wird eine Nachbehandlung mit Borenthaltenden Verbindungen vorgesehen.

Ein Nachteil derart nachbehandelter Pigmente besteht darin, daß diese Zusätze häufig Unverträglichkeiten mit den üblicherweise verwendeten Bindemitteln zeigen.

Aufgabe der vorliegenden Erfindung ist es somit, einen Weg zu finden, die thermische Stabilität Eisen-(II)-haltiger Eisenoxidpigmente in Gegenwart von Luft oder anderen, Sauerstoff enthaltenden Gasen bzw. Sauerstoff selbst wirksam zu verbessern. Dabei sollen die Pigmente auch die übrigen Nachteile der dem Stand der Technik angehörenden Pigmente nicht aufweisen.

Überraschenderweise wurde nun gefunden, daß diese Anforderungen in hervorragender Weise erfüllt werden durch Eisenoxidpigmente mit einem Eisen-(II)-Gehalt von mindestens 5 Gew.-%, gerechnet als FeO, welche dadurch gekennzeichnet sind, daß sie mit einer Substanz der allgemeinen Formel

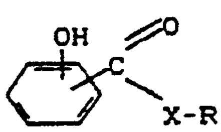

nachbehandelt sind, wobei

X = O oder NH und
R = einen gegebenenfalls substituierten linearen oder verzweigten Alkyl- oder Alkylenrest mit 1-30 C-Atomen oder
einen gegebenenfalls substituierten Cycloalkylrest mit 5-12 C-Atomen oder
einen gegebenenfalls substituierten Arylrest mit 5-10 C-Atomen oder
Wasserstoff bedeuten, wobei die Menge der Nachbehandlungssubstanz zwischen 0,1 und 10 Gew.-%, bezogen auf das Eisenoxidpigment, beträgt.

Diese Eisenoxidpigmente sind Gegenstand der vorliegenden Erfindung.

Aus der FR-A-2281410 wird die Nachbehandlung von Pigmenten auf Blei- und Chrombasis beschrieben. In diesem Zusammenhang werden zwar auch als Nachbehandlungssubstanzen Salicylsäure und Derivate

davon genannt, wodurch eine Erhöhung der Thermostabilität erreicht werde.

Dem Fachmann wird beim genaueren Studium dieser Entgegenhaltung jedoch nicht klar, inwieweit die dort beschriebenen Pigmente thermoinstabil sein können. Es handelt sich hierbei jeweils um Pigmente, in denen die farbgebenden Kationen in der höchsten Oxidationsstufe vorliegen. Diese sind nicht mehr oxidationsempfindlich. Weiter ist darauf hinzuweisen, daß entsprechend den Beispielen der Entgegenhaltung immer große Mengen an Nachbehandlungssubstanzen bzw. anorganischorganische Mehrfachbeschichtungen aufgebracht werden. Solche Mengen beeinträchtigen jedoch schon die Pigmenteigenschaften.

Besonders bevorzugt sind dabei die erfindungsgemäßen Eisenoxidpigmente, bei denen die Nachbehandlungssubstanz die allgemeine Formel

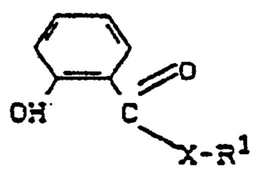

aufweist, wobei

X = O oder NH und
$R^1$ = einen linearen oder verzweigten Alkylrest mit 1-30 C-Atomen bedeuten.

Besonders gute Ergebnisse werden insbesondere auch aus Gründen der Verfügbarkeit mit solchen Eisenoxidpigmenten erreicht, bei denen in der Nachbehandlungssubstanz

$R^1$ = $-(CH_2)_n-CH_3$ mit $0 \leq n \leq 24$ oder
$-CH_2-CH=CH_2$ oder
$-CH(CH_3)_2$ oder
2-Ethylhexyl

bedeutet.

Besonders bevorzugt sind Salicylsäureester (X = O), die aliphatische Alkoholkomponenten mit 2 bis 18 C-Atomen enthalten, z.B. Salicylsäureoctylester, Salicylsäuredodecylester.

Im Sinne dieser Erfindung handelt es sich bei den nachbehandelten Eisenoxidpigmenten um Magnetit oder Mischphasen von Magnetit mit Maghämit (Bertholloide Eisenoxide) und Ferrite.

Neben der oben beschriebenen Stabilisierung dieser Eisenoxidpigmente gegen eine Veränderung der Temperaturbelastung wird auch deren Dispergierbarkeit verbessert, was für die Verarbeitung in Farb- und Magnetlackdispersionen von großem Vorteil ist.

Gegenstand der vorliegenden Erfindung ist auch ein Verfahren zur Herstellung der erfindungsgemäßen Pigmente. Eine Ausführungsform des erfindungsgemäßen Verfahrens besteht darin, daß die Nachbehandlungssubstanzen in homogener Lösung den Eisenoxiden vorgelegt werden. Dies kann beispielsweise so erfolgen, daß die Nachbehandlungssubstanz in einem geeigneten Lösungsmittel gelöst vorgelegt wird und das Eisenoxidpigment unter Rühren zugegeben wird ; das so hergestellte beschichtete Eisenoxidpigment wird aus der Suspension isoliert, z.B. durch Absaugen oder durch Verdampfen des Lösemittels in einem Sprühtrockner.

In geeigneten Mischvorrichtungen kann des Aufbringen der Nachbehandlungssubstanzen auch aus wäßriger Dispersion oder in trockenem Zustand erfolgen. Geeignete Verfahren sind z.B. Luftstrahlmahlung, Dampfstrahlmahlung oder Naßmahlung.

Eine Ausführungsform des erfindungsgemäßen Verfahrens besteht also darin, daß die Nachbehandlungssubstanzen als Suspension vorgelegt werden. In einer weiteren Ausführungsform ist es auch möglich, daß die Nachbehandlungssubstanzen in trockenem Zustand mit dem zu stabilisierenden Eisenoxid in einem geeigneten Mahl- oder Mischorgan vermengt werden.

Die erfindungsgemäßen Nachbehandlungssubstanzen werden in Mengen von 0,1-10 Gew.-%, bezogen auf das zu stabilisierende Eisenoxidpigment eingesetzt. Die angewendeten Mengen Nachbehandlungssubstanz sollten möglichst so optimiert sein, daß sie der Menge, die im Gleichgewichtszustand auf dem Eisenoxidpigment absorbiert wird, entsprechen.

Gegenstand der vorliegenden Erfindung ist auch die Verwendung der erfindungsgemäßen Eisenoxidpigmente zur Herstellung magnetischer Aufzeichnungsträger oder zur Einfärbung anorganischer und/oder organischer Materialien.

Im folgenden wird die Erfindung beispielhaft erläutert, ohne daß hierin eine Einschränkung zu sehen ist.

Beispiel 1

In 1.000 g n-Heptan werden 12 g Salicylsäuremethylester gelöst vorgelegt; unter Dispergieren mit einem Ultraturrax werden 400 g Pigment 2 zugegeben und 30 min weiter dispergiert. Unter Rühren wird die Suspension 6 h bei Raumtemperatur aufbewahrt; danach wird das so behandelte Pigment in einer Vakuumnutsche filtriert, mit n-Heptan gewaschen und bei 40°C im Vakuum getrocknet.

In den Beispielen 2-9 werden lediglich das Pigment (Pigment 1 oder Pigment 2), die verwendete Nachbehandlungssubstanz (a, b, c, d oder e), die vorgelegte Menge davon die Behandlungstemperatur T und das Lösemittel variiert, so wie in Tab. 2 exakt angegeben.

Tabelle 1 Charakterisierung der in den Beispielen verwendeten magnetischen Eisenoxide (Magnetite)

| | Pigment 1* | Pigment 2* |
|---|---|---|
| Teilchenlänge [µm] | 0,35 | 0,3 |
| Länge/Breite-Verhältnis | 9:1 | 10:1 |
| BET-Oberfläche [$m^2/g$] | 27 | 27 |
| Ölabsorption [g/100 g] DIN | 50 | 42 |
| Koerzitivkraft [Oe] | 440 | 635 |
| Pigmentart | 1 | 2 |
| $Fe^{2+}$-Gehalt [%] | 24 | 14,5 |

*) Pigment 1: Bayferrox® AC 5111 M
Handelsprodukt der Bayer AG
(Magnetit)

*) Pigment 2: Bayferrox® AC 5127 M
Handelsprodukt der Bayer AG
(cobaltepitaxial beschichteter Magnetit)

Tabelle 2

| Beispiel | Temp. [°C] | Pigment | Nachbehandlungssubstanz Art | Menge [g/100 g Pigment] | Lösungsmittel | $Fe^{2+}$-Gehalt 1) nach 1 h 150 Luft [%] |
|---|---|---|---|---|---|---|
| Nullprobe | | 1 | | - | - | 0,6 |
| Nullprobe | | 2 | | - | - | 2 |
| 1 | 25 | 2 | A | 3 | n-Heptan | 13,1 |
| 2 | 50 | 2 | B | 3 | Wasser | 13,1 |
| 3 | 25 | 2 | B | 6 | n-Heptan | 13,2 |
| 4 | 25 | 2 | C | 3 | Toluol | 13,1 |
| 5 | 60 | 2 | C | 3 | Wasser | 13,3 |
| 6 | 25 | 2 | D | 3,5 | n-Heptan | 13,8 |
| 7 | 25 | 2 | E | 3,5 | Ethanol | 12,0 |
| 8 | 25 | 1 | B | 5 | Toluol | 21 |
| 9 | 60 | 1 | B | 5 | Wasser/Ethanol 1 : 1 | 20 |

Die eingesetzten Nachbehandlungssubstanzen a-e haben die in Tabelle 3 angegebenen Formelbilder:

1. Aus den unterschiedlichen $Fe^{2+}$-Gehalten der stabilisierten und nicht stabilisierten Pigmentproben nach Temperaturbelastung ist die sehr gute stabilisierende Wirkung der erfindungsgemäßen Nachbehandlungssubstanzen ersichtlich.

Tabelle 3

Eingesetzte Nachbehandlungssubstanzen

A = 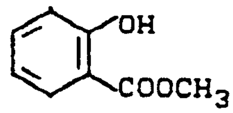

B = 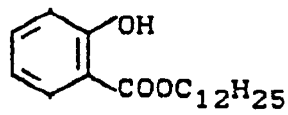

C = 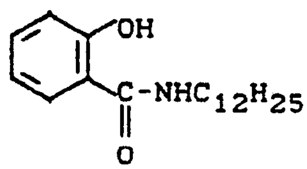

D = 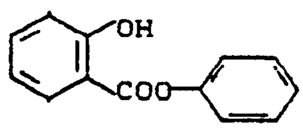

E = 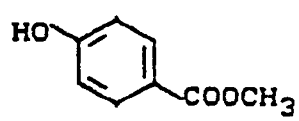

Die erfindungsgemäß nachbehandelten Magnetite bzw. cobaltepitaxial-beschichteten Magnetite wurden nach Temperaturbelastung zur Herstellung von magnetischen Aufzeichnungsträgern eingesetzt und mit den entsprechenden nicht nachbehandelten Magnetiten, mit denen nach gleicher Temperaturbelastung Aufzeichnungsträger hergestellt wurden, gegenübergestellt.

Herstellung von Mullerbändern

Auf einem Muller werden 1 g Magnetpigment mit 1,5 ml einer 25%igen Lösung von Vinylite (VAGH) in Dimethylformamid mit einem Spatel vermischt und unter einem Druck von 6 kg wie folgt dispergiert :

2 mal ein Zyklus zu 25 Umdrehungen, 1 mal ein Zyklus zu 50 Umdrehungen und 1 mal ein Zyklus zu 100 Umdrehungen. Danach werden weitere 1,5 ml der Bindemittellösung zugegeben und ein weiterer Zyklus von 25 Umdrehungen gefahren. Mit einem Rakel von 60 µ wird das Material auf eine Polyesterfolie aufgebracht. Nach Trocknung des Lackes wird das Band vermessen.

Tabelle 4: Ergebnisse der Bandabtestung

| Pigment | IHc [Oe] | 150° C vor der Bandherstellung [min] |
|---|---|---|
| Nullprobe | 660 | 0 |
| " | 640 | 30 |
| " | 630 | 60 |
| " | 621 | 90 |
| nach Beispiel 3 | 663 | 30 |
| " " " | 665 | 60 |
| " " " | 664 | 90 |

Aus der Tabelle ist ersichtlich, daß bei den nicht stabilisierten Pigmentproben ein deutlicher Abfall der Koerzitivkraft auftritt.

## Patentansprüche

1. Eisenoxidpigmente mit einem Eisen(II)-Gehalt von mindestens 5 Gew.-%, gerechnet als FeO, dadurch gekennzeichnet, daß sie mit einer Substanz der allgemeinen Formel

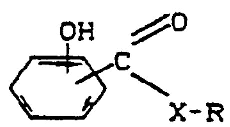

nachbehandelt sind, wobei

X = O oder NH und
R = einen gegebenenfalls substituierten linearen oder verzweigten Alkyl- oder Alkylenrest mit 1-30 C-Atomen oder
einen gegebenenfalls substituierten Cycloalkylrest mit 5-12 C-Atomen oder
Wasserstoff bedeuten, wobei die Menge der Nachbehandlungssubstanz zwischen 0,1 und 10 Gew.-%, bezogen auf das Eisenoxidpigment, beträgt.

2. Eisenoxidpigmente gemäß Anspruch 1, dadurch gekennzeichnet, daß die Substanz die allgemeine Formel

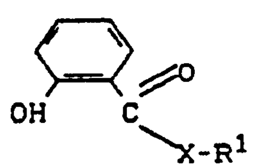

aufweist, wobei

X = O oder NH und
$R^1$ = einen linearen oder verzweigten Alkylrest mit 1-30 C-Atomen bedeuten.

3. Eisenoxidpigmente gemäß Anspruch 2, dadurch gekennzeichnet, daß

$R^1$ = $-(CH_2)_n-CH_3$ mit $0 \leq n \leq 24$ oder
$-CH_2-CH=CH_2$ oder
$-CH(CH_3)_2$ oder
2-Ethylhexyl

bedeutet.

4. Eisenoxidpigmente gemäß einem oder mehrerer der Ansprüche 1 bis 3, dadurch gekennzeichnet, daß es sich bei den nachbehandelten Eisenoxidpigmenten um Magnetit oder Mischphasen von Magnetit mit Mäghämit (Bertholloide Eisenoxide) und Ferrite handelt.

5. Verfahren der Herstellung der Eisenoxide gemäß einem oder mehreren der Ansprüche 1 bis 4, dadurch gekennzeichnet, daß die Nachbehandlungssubstanzen in homogener Lösung den Eisenoxiden vorgelegt werden.

6. Verfahren zur Herstellung der Eisenoxide gemäß einem oder mehreren der Ansprüche 1 bis 4, dadurch gekennzeichnet, daß die Nachbehandlungssubstanzen als Suspension vorgelegt werden.

7. Verfahren zur Herstellung der Eisenoxide gemäß einem oder mehreren der Ansprüche 1 bis 4 dadurch gekennzeichnet, daß die Nachbehandlungssubstanzen in trockenem Zustand mit dem zu stabilisierenden Eisenoxid in einem geeigneten Mahl- oder Mischorgan vermengt werden.

8. Verwendung der Eisenoxide gemäß einem der Ansprüche 1 bis 7 zur Herstellung magnetischer Aufzeichnungsträger.

9. Verwendung der Eisenoxide gemäß einem der Ansprüche 1 bis 8 zur Einfärbung anorganischer und/oder organischer Materialien.

## Claims

1. Iron oxide pigments having an iron(II) content of at least 5% by weight, expressed as FeO, characterized in that they are after-treated with a substance corresponding to the following general formula

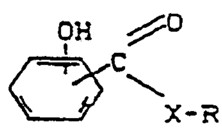

in which

X = O or NH and
R = an optionally substituted linear or branched alkyl or alkylene radical containing 1 to 30 C atoms or an optionally substituted cycloalkyl radical containing 5 to 12 C atoms or hydrogen,
the after-treatment substance being used in a quantity of 0.1 to 10% by weight, based on the iron oxide pigment.

2. Iron oxide pigments as claimed in claim 1, characterized in that the substance corresponds to the following general formula

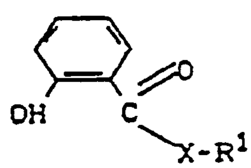

in which

X = O or NH and
$R^1$ = a linear or branched alkyl radical containing 1 to 30 carbon atoms.

3. Iron oxide pigments as claimed in claim 2, characterized in that

$R^1$ = $-(CH_2)_n-CH_3$ with $0 \leq n \leq 24$ or
$-CH-CH=CH_2$ or
$-CH(CH_3)_2$ or
2 -ethylhexyl.

4. Iron oxide pigments as claimed in one or more of claims 1 to 3, characterized in that the after-treated iron oxide pigments are magnetite or mixed phases of magnetite with maghemite (Bertholloide iron oxides) and ferrites.

5. A process for the production of the iron oxides claimed in one or more of claims 1 to 4, characterized in that the after-treatment substances are added to the iron oxide in homogeneous solution.

6. A process for the production of the iron oxides claimed in one or more of claims 1 to 4, characterized in that the after-treatment substances are added in the form of a suspension.

7. A process for the production of the iron oxides claimed in one or more of claims 1 to 4, characterized in that the after-treatment substances are dry-mixed with the iron oxide to be stabilized in a suitable grinding or mixing unit.

8. The use of the iron oxides claimed in any of claims 1 to 7 for the production of magnetic recording supports.

9. The use of the iron oxides claimed in any of claims 1 to 8 for colouring inorganic and/or organic materials.

## Revendications

1. Pigments d'oxyde de fer d'une teneur en fer (II) d'au moins 5% en poids, calculée en FeO, caractérisés en ce qu'ils sont soumis à un post-traitement avec une substance de formule générale

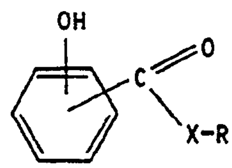

dans laquelle

X = O ou NH et
R = un reste alkyle ou alkylène en $C_1$-$C_{30}$ à chaîne droite ou ramifiée, éventuellement substitué, ou bien un reste cycloalkyle en $C_5$-$C_{12}$ éventuellement substitué, ou bien l'hydrogène, la quantité de substance de post-traitement étant comprise entre 0,1 et 10% en poids, par rapport au pigment d'oxyde de fer.

2. Pigments d'oxyde de fer selon la revendication 1, caractérisés en ce que la substance répond à la formule générale

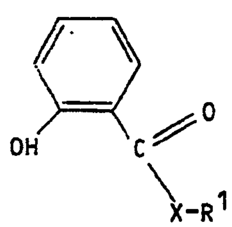

dans laquelle

X = O ou NH et
$R^1$ = un reste alkyle en $C_1$-$C_{30}$ à chaîne droite ou ramifiée.

3. Pigments d'oxyde de fer selon la revendication 2, caractérisés en ce que

$R^1$ = —$(CH_2)_n$-$CH_3$ avec $0 \leq n \leq 24$ ou
—$CH_2$-$CH = CH_2$ ou
—$CH(CH_3)_2$ ou

2-éthylhexyle.

4. Pigments d'oxyde de fer selon une ou plusieurs des revendications 1 à 3, caractérisés en ce que les pigments de fer post-traités sont la magnétite ou des phases mixtes de magnétite avec la maghémite (oxydes de fer bertholloïdes) et des ferrites.

5. Procédé de fabrication des oxydes de fer selon l'une ou plusieurs des revendications 1 à 4, caractérisé en ce que les substances de post-traitement sont appliquées en solution homogène sur les oxydes de fer.

6. Procédé pour la fabrication des oxydes de fer selon l'une ou plusieurs des revendications 1 à 4, caractérisé en ce que les substances de post-traitement sont appliquées sous forme de suspension.

7. Procédé pour la fabrication des oxydes de fer selon l'une ou plusieurs des revendications 1 à 4, caractérisé en ce que les substances de post-traitement sont mélangées à l'état sec avec l'oxyde de fer à stabiliser dans un organe de broyage ou mélangeur approprié.

8. Utilisation des oxydes de fer selon l'une des revendications 1 à 7 pour la fabrication de supports d'enregistrement magnétiques.

9. Utilisation des oxydes de fer selon l'une des revendications 1 à 8 pour la coloration de matières inorganiques et/ou organiques.